# EUROPEAN PATENT APPLICATION

(11) **EP 1 842 706 A1**
(43) Date of publication of application: **10.10.2007**
(21) Application number: 06007176.8
(22) Date of filing: 05.04.2006
(51) Int. Cl.: B60J 5/04

(54) **Reinforcement beam for a structural part of a motor vehicle body**

(71) Applicant: Wagon Automotive GmbH, 63857 Waldaschaff (DE)
(72) Inventor: Keller, Roland, 97904 Dorfprozelten (DE); Diehm, Jürgen, 97877 Wertheim (DE)
(74) Representative: Gesthuysen, von Rohr & Eggert

(57) **Abstract**

The invention relates to a reinforcement beam (3) for a structural part (2) of a motor vehicle body, in particular a side impact protection beam (3) for a side door (2) of the motor vehicle body. A one-piece elongated open metal profile defines a longitudinal axis and has at least one U-shaped main portion (5) with a bottom (6) and two U-legs (7), the bottom (6) forming an outer wall of the metal profile, and at least two flanges (8) extending laterally outwardly form the U-legs (7) of the main portion (5). The main portion (5) and the flanges (8) extend over substantially the entire length of the reinforcement beam (3). The flanges (8) are separated from the main portion (5) over an appropriate length at both longitudinal ends of the main portion (5). The separated end portions (9) of the flanges (8) are adapted to be used for connecting the reinforcement beam (3) to suitable attachment surfaces (10) on the associated structural part (2) of the motor vehicle body.

## Description

The invention relates to a reinforcement beam for a structural part of a motor vehicle body, and in particular to a side impact protection beam for a side door of a motor vehicle body, all according to the generic part of claim 1.

Reinforcement beams for structural parts of a motor vehicle body are generally used to minimize deformation of the structural part of the motor vehicle body towards the passenger compartment upon receiving lateral loads during a collision of the motor vehicle. Those reinforcement beams can be used as dashboard reinforcement structure and at other locations close to the passenger compartment. Particularly important are reinforcement beams in side doors of a motor vehicle body. Those arc called side impact protection beams.

There is ample patent literature relating to reinforcement beams for structural parts of a motor vehicle body, and in particular relating to side impact protection beams (US-A-4,090,734; US-A-4,901,500; DE-A-197 15 795; DE-A-43 27 393; DE-U-92 15 425).

The specific reinforcement beam, in particular side impact protection beam, that forms the starting point of the invention (DE-B-196 54 376) comprises a one-piece elongated open metal profile that defines a longitudinal axis. The metal profile has two U-shaped main portions each with a bottom and two U-legs, with altogether three flanges, two flanges extending laterally outwardly from the outer U-legs of the two main portions and one flange being the middle flange between the inner U-legs of the two main portions. The metal profile is a cold-roll-formed profile from a high-strength deep drawing steel.

Towards the longitudinal end of the metal profile the height of the U-shaped main portions is progressively reduced so that the free ends of the metal profile are simple flat metal strips. Those flat metal strips are wider than the metal profile in the middle-section with the U-shaped main portions. Although the flat strips ends of this reinforcement beam allow some bending and twisting in order to conform to suitable mating attachment surfaces on the frame or panel of the structural part of the motor vehicle body, the flexibility as far as attachment is concerned still needs further improvement. Moreover, the resistance of the complete metal profile is substantially reduced towards the ends thereof.

So the object of the present invention is to provide a light weight compact, high-resistance reinforcement beam that shows highest flexibility as far as attachment to a structural part of a motor vehicle body is concerned.

Above mentioned problem is solved by a reinforcement beam comprising the features of the generic part of claim 1 and in addition the features of the characterizing part of claim 1.

According to the invention the U-shaped main portion extends over substantially the entire length of the reinforcement beam, too. So there are no broad strips of flat material at the ends thereof. Instead, towards the ends of the metal profile the flanges are separated from the main portion. So each flange of narrow width is used to connect the metal profile to the structural part at an appropriate mating attachment surface. Those narrow separated end portions of the flanges have less flexural strength than the broad strips of the flat material in the prior art system. They can be bent and/or twisted to conform to the corresponding mating attachment surfaces on a frame or panel of the corresponding structural part of the motor vehicle body. In spite of this flexible attachment means the overall impact resistance of the inventive reinforcement beam is hardly reduced compared with a reinforcement beam without any modification at the longitudinal ends thereof.

Further improvements and specific characteristics of the reinforcement beam according to the invention may be obtained from the dependent claims 2 to 7.

Claim 8 relates to a side door of a motor vehicle body which is equipped with a side impact protection beam according to any one of the claims 1 to 7. Details are the subject matter of the following dependent claims 9 and 10.

Now, the invention is described with reference to the drawings with reference to a preferred embodiment of the invention. This description has no limiting effect to the scope of protection which is solely defined by the appended claims. In the drawings:
- Fig. 1: shows a schematic side view of a motor vehicle with a reinforcement beam as a side impact protection beam in the side doors of the motor vehicle body,
- Fig. 2: shows a schematic top plan view of a side impact protection beam within a side door of a motor vehicle body,
- Fig. 3: shows a perspective view of a preferred embodiment of a reinforcement beam according to the invention,
- Fig. 4: shows in an enlarged view the attachment area at one end of the reinforcement beam according to the invention.

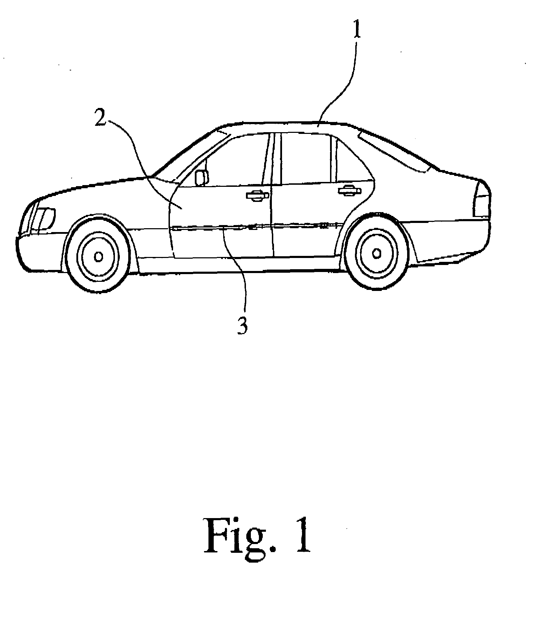

Fig. 1 shows a motor vehicle with a vehicle body 1 with - here - two side doors 2. In general the invention relates to a reinforcement beam 3 for any structural part of a motor vehicle body 1. However, this preferred embodiment of the invention describes the invention along with a side impact protection beam 3 for the side door 2 of the motor vehicle body 1.

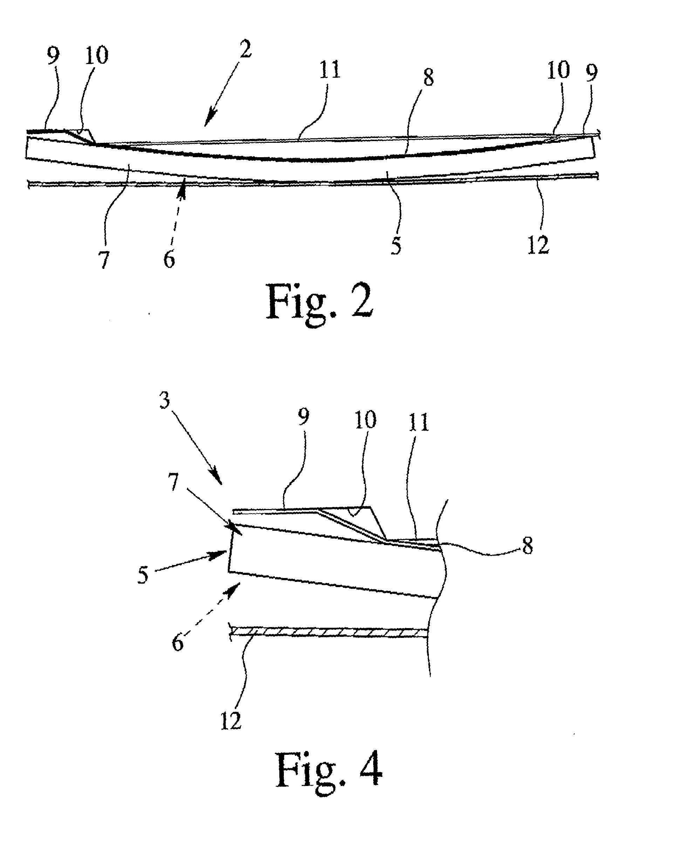

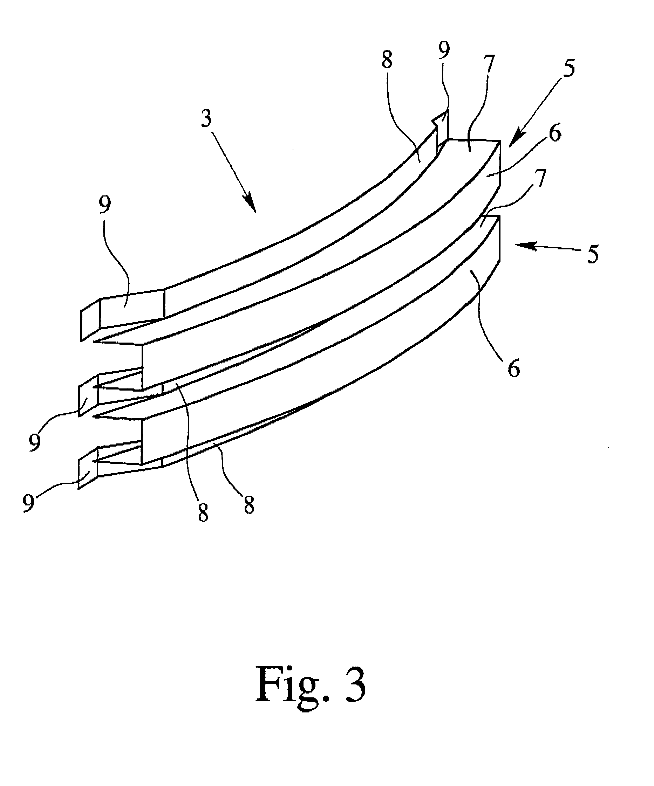

Fig. 2 and 3 together show that there is a one-piece elongated open metal profile defining a longitudinal axis of the side impact protection beam 3. The metal profile, as can be seen in Fig. 3, has at least one U-shaped main portion 5 with a bottom 6 and two U-legs 7, the bottom 6 forming an outer wall of the metal profile. Further, the metal profile has at least two flanges 8 extending laterally outwardly from the U-legs 7 of the main portion 5.

The main portion 5 and the flanges 8 extend over substantially the entire length of the reinforcement beam 3. The flanges 8 are separated from the main portion 5 over an appropriate length at both longitudinal ends of the main portion 5 and the separated end portions 9 of the flanges 8 are adapted to be used for connecting the reinforcement beam 3 to suitable attachment surfaces 10 on the associated structural part 2 of the motor vehicle body 1 (Fig. 2, 4).

Fig. 2 and 3 together show how the separated end portions 9 of the flanges 8 serve as attachment means for attaching the beam 3 to the structural part 2 of the motor vehicle body I, namely here the side door 2. This brings about the advantages which were discussed in the introductory part of the description.

An important point of the invention is that the separated end portions 9 of the flanges 8 can be bent out of and/or twisted relative to the plane of the not separated main portions of the flanges 8. Fig. 3 shows that each separated end portion 9 is bent twice in order to conform to a suitable mating attachment surface 10 on the structural part 2 of the vehicle body 1.

Fig. 3 shows that in the preferred embodiment each flange 8 is separated by a cut extending along the longitudinal bending line between the U-leg 7 and the flange 8. It is intended to have simple, narrow flat strips of sheet metal as means for attaching the beam 3 to the structural part 2.

In order to get an impression regarding the measures involved here it shall be stated that in a preferred embodiment of the invention the appropriate length of the separated end portion 9 of the flange 8 is between 20 mm and 150 mm, preferably between about 40 mm and about 100 mm, and/or the width of each flange 8 is between about 10 mm and about 30 mm.

Fig. 3 shows that in the present embodiment the contour of the U-shaped main portions 5 are different from the contour of the corresponding portions in the prior art reinforcement beam that forms the starting point of the invention. Here, in this preferred embodiment of the invention, it is provided that bottom 6, U-legs 7, and/or flanges 8 have a substantially straight contour in a direction perpendicular to the longitudinal axis with sharp bending lines in between.

Fig. 2 shows that the preferred embodiment of the reinforcement beam 3, here as a side impact protection beam 3 for a side door 2, is curved outwardly for improved impact resistance. This is a concept generally adopted in the prior art cited in the introductory part of the description. Here it is provided that the open metal profile as such or at least the outer wall 6 thereof is curved outwardly along said longitudinal axis, preferably with a substantially constant curvature.

In general in the context of the present description the term "outer" or "outwardly" relates to the direction away from the passenger compartment when the reinforcement beam is mounted within the structural part of the motor vehicle body.

It has been said before that one aspect of the invention is that the main portion 5 and the flanges 8 of the metal profile extend over substantially the entire length of the reinforcement beam 3. However, if mounting space at the relevant location is restricted it is still possible to provide that the main portion 5 of the metal profile has a progressively reduced height towards at least one longitudinal end thereof. Such structure is not shown in the drawings.

As explained in the prior art mentioned above (US-A-4,090,734) in a preferred embodiment it is provided that the metal profile is a cold-roll-formed profile from a high-strength, deep drawing steel, preferably with a tensile strength of more than 400 MPa. In general interesting information about different high-strength steel with deep drawing qualities is published in the periodical "Max Planck Forschung", 3/2004, pages 36 to 41, published by the Max Planck Association in Germany.

Fig. 2 shows the side impact protection beam 3 mounted within a side door 2 of a motor vehicle body. Fig. 4 shows an enlarged view of the end section of this side impact protection beam 3.

The side door 2 indicated in Fig. 2 shows a. structural inner panel 11 of metal, preferably of a regular strength weldable steel. However a light metal like aluminum may be used, as well as a structural frame instead of a structural inner panel 11. An outer panel 12 preferably of plastics is indicated in Fig. 2 and 4 as well.

Fig. 2 and 4 show that in this preferred embodiment of a side door 2 the side impact protection beam 3 is connected to the inner panel 11 by means of the separated end portions 9 of the flanges 8. The separated end portion 9 at the left end in Fig. 2 and in the enlarged view in Fig. 4 is bent out of the plane of the not separated main portion of the flange 8 to the mating attachment surface 10 on the inner panel 11, The mating attachment surface 10 at the left end of the beam 3 is offset to the attachment surface 10 at the right end in Fig. 2.

In a preferred embodiment it is provided that the side impact protection beam 3 is connected to the frame or panel 11 by welding, in particular spot-welding of the separated end portions 9 of the flanges 8 to the mating attachment surfaces 10 on the frame or panel 11. However, as an alternative or in addition it is possible that the side impact protection beam 3 is connected by mechanical joining, in particular by riveting, of the separated end portions 9 of the flanges 8 to the mating attachment surfaces 10 on the frame or panel 11.

## Claims

1. Reinforcement beam (3) for a structural part (2) of a motor vehicle body, in particular side impact protection beam (3) for a side door (2) of a motor vehicle body, comprising
a one-piece elongated open metal profile defining a longitudinal axis,
wherein the metal profile has at least one U-shaped main portion (5) with a bottom (6) and two U-legs (7), the bottom (6) forming an outer wall of the metal profile, and at least two flanges (8) extending laterally outwardly form the U-legs (7) of the main portion (5),
**characterized in that**
the main portion (5) and the flanges (8) extend over substantially the entire length of the reinforcement beam (3),
the flanges (8) are separated from the main portion (5) over an appropriate length at both longitudinal ends of the main portion (5) and
the separated end portions (9) of the flanges (8) are adapted to be used for connecting the reinforcement beam (3) to suitable attachment surfaces (10) on the associated structural part (2) of the motor vehicle body (1).

2. Reinforcement beam according to claim 1, **characterized in that**
the separated end portions (9) of the flanges (8) are bent out of and/or twisted relative to the plane of the not separated main portions of the flanges (8) and/or each flange (8) is separated by a cut extending along the longitudinal bending line between the U-leg (7) and the flange (8).

3. Reinforcement beam according to any one of the preceding claims,
**characterized in that**
the appropriate length of the separated end portion (9) of the flange (8) is between 20 mm and 150 mm, preferably between about 40 mm and about 100 mm, and/or the width of each flange (8) is between about 10 mm and about 30 mm.

4. Reinforcement beam according to any one of the preceding claims, **characterized in that**
bottom (6), U-legs (7), and/or flanges (8) have a substantially straight contour in a direction perpendicular to the longitudinal axis with sharp bending lines in between.

5. Reinforcement beam according to any one of the preceding claims, **characterized in that**
the open metal profile as such or at least the outer wall thereof is curved outwardly along said longitudinal axis, preferably with a substantially constant curvature, and/or the main portion (5) of the metal profile has a progressively reduced height towards at least one longitudinal end of the metal profile.

6. Reinforcement beam according to any one of the preceding claims, **characterized in that**
the metal profile is a cold-roll-formed profile from a high-strength, deep drawing steel, preferably with a tensile strength of more than 400 MPa.

7. Reinforcement beam according to any one of the preceding claims, **characterized in that**
the metal profile has two U-shaped main portions (5) and altogether three flanges (8), one flange (8) between the two U-shaped portions (5).

8. Side door of a motor vehicle body,
comprising a structural frame or a structural inner panel (11) of metal, preferably of a regular strength steel or a light metal like aluminum, and a side impact protection beam (3) according to any one of the claims 1 to 7,
**characterized in that**
the side impact protection beam (3) is connected to the frame or panel (11) by means of the separated end portions (9) of the flanges (8), and
the separated end portions (9) of the flanges (8) arc bent and/or twisted to conform to suitable mating attachment surfaces (10) on the frame or panel (11).

9. Side door according to claim 8, **characterized in that**
the side impact protection beam (3) is connected to the frame or panel (11) by welding, in particular spot-welding of the separated end portions (9) of the flanges (8) to the mating attachment surfaces (10) on the frame or panel (11).

10. Side door according to claim 8 or 9, **characterized in that**
the side impact protection beam (3) is connected by mechanical joining, in particular by riveting, of the separated end portions (9) of the flanges (8) to the mating attachment surfaces (10) on the frame or panel (11).
